# EUROPÄISCHE PATENTSCHRIFT

(11) **EP 0 985 261 B1**
(45) Veröffentlichungstag und Bekanntmachung des Hinweises auf die Patenterteilung: **10.07.2002**
(21) Anmeldenummer: 98912137.1
(22) Anmeldetag: 02.04.1998
(51) Int. Cl.: H02J 9/06

(54) **NETZGERÄT**
POWER PACK
APPAREIL D'ALIMENTATION

(30) Priorität: 30.05.1997 AT 92897
(43) Veröffentlichungstag der Anmeldung: 15.03.2000
(73) Patentinhaber: Siemens Aktiengesellschaft Österreich, 1210 Wien (AT)
(72) Erfinder: KRANISTER, Andreas, A-3150 Wilhelmsburg (AT); SCHWEIGERT, Harald, A-1120 Wien (AT)
(74) Vertreter: Matschnig, Franz, Dipl.-Ing.
(86) Internationale Anmeldenummer: AT9800087
(87) Internationale Veröffentlichungsnummer: WO9854817

(56) Entgegenhaltungen:
- EP-A- 0 316 781
- DE-A- 3 616 189
- FR-A- 2 558 654
- GB-A- 2 192 504
- US-A- 4 897 631
- F.F.KUNZIGER: "RELIABILITY CONSIDERATIONS FOR OLS HOLDOVER CIRCUITS" APEC 97 SECOND ANNUAL IEEE APPLIED POWER ELECTRONICS CONFERENCE AND EXPOSITION , 2.März 1987, USA, Seiten 207-213, XP002071523

## Beschreibung

Netzgerät zur Versorgung eines direkt oder über einen Umrichter an einem unstabilisierten Gleichspannungszweig des Netzgerätes liegenden Verbrauchers, mit einem aus dem Gleichspannungszweig aufladbaren Pufferkondensator, der den Gleichspannungszweig bei Netzausfall oder -einbruch noch eine bestimmte Mindestzeit versorgt, und der über einen hochohmigen Ladewiderstand an der Spannung des Gleichspannungszweiges liegt, wobei dem Ladewiderstand eine Diode parallelgeschaltet ist, über welche bei Abfall der Eingangsgleichspannung unter die Minimalspannung der Verbraucher aus dem Pufferkondensator versorgt wird.

Bei elektrischen Energieumsetzern sind oft Pufferkondensatoren vorhanden, z.B. bei Schaltnetzteilen mit einer Zwischenkreisspannung. Derartige Pufferkondensatoren sollen in erster Linie einen Überbrückungsbetrieb bei kurzzeitigem Netzausfall ermöglichen. Die Dimensionierung der Pufferkondensatoren bringt Probleme mit sich, falls die Spannung im Gleichspannungszweig großen Schwankungen unterliegt, was beispielsweise bei Netzgeräten der Fall ist, die ohne Umschaltung für einen großen Netzspannungsbereich vorgesehen sind. Einerseits müssen die Pufferkondensatoren eine minimale Speicherenergie aufweisen, um die Netzausfall-Überbrückungszeit, die in der jeweiligen Spezifikation des Netzgerätes enthalten ist, zu gewährleisten, und andererseits müssen die Pufferkondensatoren auf die maximal auftretende Spannung im Gleichspannungszweig dimensioniert werden. Im Zeitpunkt eines Netzausfalles oder eines Netzspannungseinbruches sind die Pufferkondensatoren oft nur auf die der minimalen Netzspannung entsprechenden Zwischenkreisspannung aufgeladen, sodaß wegen der quadratischen Abhängigkeit des Energieinhaltes eines Kondensators von der Spannung die gespeicherte Energie weit unter jener Energie liegt, welche der Maximalspannung im Gleichspannungszweig entspricht.

Unabhängig von dem Problem des Energieinhaltes kann es bei der Speisung aus Wechselstromnetzen durch das periodische, impulsförmige Nachladen der Kondensatoren zu extremen Verzerrungen und entsprechend hohem Oberwellengehalt im Wechselstromnetz kommen.

Zur Beseitigung oder Minderung dieser Probleme sind unterschiedliche Lösungsansätze bekannt geworden:
a) Man erweitert den Arbeitsbereich des Verbrauchers (Umsetzers) zu niedrigeren Versorgungsspannungen, wodurch die Pufferkondensatoren bei Aufrechterhaltung der Funktion des Verbrauchers auf eine niedrigere Spannung entladen werden können. Nachteilig bei dieser Lösung sind hohe Entwicklungskosten, da man bald an die Grenzen der technischen Realisierbarkeit stößt, eine ineffiziente Nutzung des Umsetzers sowie ein Nichtberücksich tigen der Verzerrungen.
b) Der Pufferkondensator wird hinsichtlich des notwendigen Energieinhalts auf die minimale Versorgungsspannung dimensioniert. Dies führt dazu, daß der Pufferkondensator einerseits erheblich überdimensioniert ist und andererseits nur ein Teil seines Speichervermögens genutzt wird. Gewicht, Volumen und Preis des Pufferkondensators nehmen unerwünschte Werte an und die Netzverzerrungen werden noch größer.
c) Durch Vorschalten einer stabilisierten Hochsetzstufe wird die Spannung an dem Pufferkondensator unabhängig von Schwankungen der Netzspannung auf einem festen Wert gehalten. Diese Lösung, die eine eigene Schaltnetzteilstufe erfordert, löst zwar die beiden oben genannten Probleme, allerdings muß ein sehr hoher Aufwand für die Entwicklung und Realisierung ebenso in Kauf genommen werden, wie ein größerer Raumbedarf.

Eine andere Möglichkeit zur Behebung dieses Problemes ist in der nicht vorveröffentlichten Patentanmeldung A 1328/96 der Anmelderin beschrieben. Dabei ist der Pufferkondensator über eine eigene Ladeschaltung auf eine Spannung aufladbar, die, unabhängig von Spannungsschwankungen im Gleichspannungszweig, im wesentlichen konstant ist und die im wesentlichen dem oberen Grenzwert der Gleichspannung entspricht, auf welchen das Netzgerät dimensioniert ist, wobei der Pufferkondensator über einen gesteuerten Schalter bei Unterspannung im Netz oder im Gleichspannungszweig an den Gleichspannungszweig aufschaltbar ist.

Wenngleich sich die zuletzt genannte Lösung im praktischen Einsatz bewährt hat, ist sie doch in manchen Fällen zu aufwendig, da sie eine Spannungsüberwachungsschaltung, einen gesteuerten Schalter sowie zusätzliche Gleichrichterdiode benötigt.

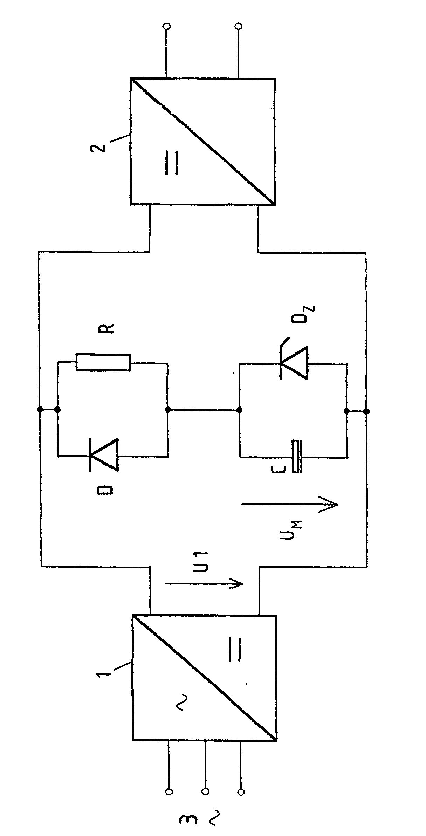

Ein Netzgerät der gegenständlichen Art geht aus der EP 0 476 431 A2, nämlich dem Ausführungsbeispiel nach Fig. 9 ebenso hervor, wie aus dem Artikel des Dokuments F.F. Kunzinger: "Reliability Considerations For OLS Holdover Circuits". Dabei wird der Pufferkondensator, der an einer ungeregelten Gleichspannung liegt, im allgemeinen auf eine höhere als die im Normalbetrieb zu erwartende Minimalspannung des Gleichspannungszweiges aufgeladen. Da für den Verbraucher bei Netzausfall eine ganz bestimmte Pufferzeit vorliegen muß, muß der Pufferkondensator auf jeden Fall hinsichtlich seiner Spannungsfestigkeit überdimensioniert werden, was sich hinsichtlich der Kosten und auch des Bauvolumens stark auswirken kann.

Es ist eine Aufgabe der Erfindung, eine einfachere und billigere Lösung der weiter oben angegebenen Probleme, die im Zusammenhang mit Pufferkondensatoren auftreten, zu finden.

Diese Aufgabe wird mit einem Netzgerät der eingangs genannten Art gelöst, bei welchem erfindungsgemäß dem Pufferkondensator ein Spannungsbegrenzungsmittel parallelgeschaltet ist, welches die Spannung an dem Kondensator im wesentlichen auf die im Normalbetrieb zu erwartende Minimalspannung des Gleichspannungszweiges begrenzt.

Die Erfindung bietet den Vorteil, daß die durch den Pufferkondensator gegebene Pufferzeit unabhängig von der Eingangsspannung ein garantiertes Minimum aufweist und daß das Energiespeichervermögen des Pufferkondensators bei jeder Eingangsspannung optimal ausgenützt wird. Der Kondensator muß daher nicht auf die maximal mögliche Spannung des Gleichspannungszweiges, sondern nur auf die im Normalbetrieb minimale Gleichspannung dimensioniert werden, wodurch sich erhebliche Einsparungen hinsichtlich des Volumens, des Gewichtes und der Kosten ergeben.

Es hat sich in der Praxis als zweckmäßig erwiesen, wenn die Zeitkonstante des RC-Zweiges Ladewiderstand-Pufferkondensator im Bereich von 5 bis 30 s liegt. Bei einer derartigen Dimensionierung sind die Energieverluste, der Ladewiderstand und das Spannungsbegrenzungsmittel sehr gering und andererseits erfolgt die Aufladung des Pufferkondensators in hinreichend kurzer Zeit.

Es ist weiters von Vorteil, wenn das Spannungsbegrenzungsmittel eine Zenerdiode ist, da sich dadurch die einfachste und kostengünstigste Möglichkeit für eine Spannungsbegrenzung ergibt.

Die Erfindung samt weiterer Vorteile ist im folgenden an Hand eines Ausführungsbeispieles näher erläutert, das in der Zeichnung veranschaulicht ist. Die einzige Figur der Zeichnung zeigt ein Blockschaltbild einer prinzipiellen Ausführungsform der Erfindung.

Aus der Zeichnung geht ein Netzgerät hervor, bei welchem ein Gleichrichter- und Eingangsteil 1 an drei Phasen eines Wechselspannungsnetzes liegt. Am Ausgang des Gleichrichter- und Eingangsteiles 1, der neben Gleichrichtern auch Filter etc. enthalten kann, liegt eine Zwischenkreis-Gleichspannung U1, die wiederum einem Umrichter 2 zugeführt ist, an dessen Ausgang ein nicht gezeigter Verbraucher liegt bzw. mehrere Verbraucher liegen, beispielsweise Rechner, Logikbausteine, Motoren, etc. Der Umrichter 2 kann beispielsweise eine Zwischenkreisspannung von 450 V in eine Gleichspannung von 24 V umrichten. Anstelle eines Umrichters 2 kann auch ein Verbraucher unmittelbar an der Spannung U1 des Gleichspannungs-Zwischenkreises liegen.

Zur Pufferung von Energie bei Netzspannungsausfällen bzw. Netzspannungseinbrüchen ist ein Pufferkondensator C vorgesehen, der jedoch nicht, wie dies nach dem Stand der Technik häufig üblich ist, ständig an der Zwischenkreisspannung U1 liegt. Vielmehr liegt der Pufferkondensator C über einen hochohmigen Ladewiderstand R an der Spannung U1 des Gleichspannungszweiges, wobei dem Pufferkondensator C eine Zenerdiode D_{Z} als Spannungsbegrenzungsmittel parallelgeschaltet ist. Die Zenerspannung dieser Diode D_{Z} wird so gewählt, daß die Spannung an dem Kondensator im wesentlichen der im Normalbetrieb zu erwartenden Minimalspannung U_{M} des Gleichspannungszweiges entspricht.

Typische Werte bei einer Gleichspannung von 450V sind 50 bis 2000µF für den Pufferkondensator C und 20 bis 300kOhm für den Ladewiderstand R.

In machen Fällen kann es sich empfehlen, an Stelle der Zenerdiode D_{z} ein anderes, nämlich genaueres Spannungsbegrenzungsmittel zu verwenden, beispielsweise einen Parallelregler mit einem Transistor. Ein solcher Parallelregler besteht im wesentlichen aus einem Transistor entsprechender Spannungsfestigkeit, einem Regeloperationsverstärker und einer Referenzspannung. Bei Verwendung von Referenzspannungselementen mit wesentlich geringeren Toleranzen und Temperaturkoeffizienten als bei üblichen Zenerdioden läßt sich das erfindungsgemäß angestrebte Ergebnis noch besser erreichen. Derartige Parallelregler sind dem Fachmann seit langem bekannt, ebenso wie der Umstand, daß sich damit gegenüber einfachen Zenerdioden eine Verbesserung der Spannungskonstanz um einen Faktor von etwa 10 erreichen läßt.

Dem Ladewiderstand R ist eine Diode D parallelgeschaltet, die als Entkoppeldiode wirkt und dann leitend wird, wenn die Zwischenkreisspannung U1 zusammenbricht, d.h. unter den Wert der Minimalspannung U_{M} fällt. In dieser Situation fließt ein Strom aus dem Pufferkondensator C in den Umrichter 2 bzw. einen Verbraucher und liefert diesem die benötigte Überbrückungsenergie. Die Diode D verhindert somit, daß bei Netzausfall oder Netzeinbruch Energie aus dem Kondensator C primärseitig abfließen kann.

Da davon auszugehen ist, daß Netzeinbrüche oder Netzausfälle nur verhältnismäßig selten vorkommen, kann der Pufferkondensator über den Ladewiderstand langsam auf seine Nennspannung, entsprechend U_{M} aufgeladen werden, sodaß über den Ladewiderstand R im Dauerbetrieb lediglich die Kondensatorleckströme kompensiert sowie der geringe Arbeitsstrom der Zenerdiode D_{Z} gedeckt werden müssen. In der Praxis übliche Zeitkonstanten RC liegen zwischen 5 und 30 s.

Im Gegensatz zu unmittelbar an die Zwischenkreisspannung gelegte Pufferkondensatoren kann der Pufferkondensator bei einem Netzgerät nach der Erfindung auf den tatsächlichen Energiebedarf dimensioniert werden, d. h. es ist keine Dimenisonierung auf die höchsten vorkommenden Zwischenkreisspannungen erforderlich und der Pufferkondensator hat auch keinen Einfluß auf den Oberwellengehalt des versorgenden Netzes.

## Patentansprüche

1. Netzgerät zur Versorgung eines direkt oder über einen Umrichter an einem unstabilisierten Gleichspannungszweig des Netzgerätes liegenden Verbrauchers, mit einem aus dem Gleichspannungszweig aufladbaren Pufferkondensator (C), der den Gleichspannungszweig bei Netzausfall oder -einbruch noch eine bestimmte Mindestzeit versorgt, und der über einen hochohmigen Ladewiderstand (R) an der Spannung (U1) des Gleichspannungszweiges liegt, wobei dem Ladewiderstand eine Diode (D) parallelgeschaltet ist, über welche bei Abfall der Eingangsgleichspannung unter die Minimalspannung (U_{M}) der Verbraucher aus dem Pufferkondensator versorgt wird,
**dadurch gekennzeichnet, daß**
dem Pufferkondensator (C) ein Spannungsbegrenzungsmittel (D_{z}) parallelgeschaltet ist, welches die Spannung an dem Kondensator im wesentlichen auf die im Normalbetrieb zu erwartende Minimalspannung (U_{M}) des Gleichspannungszweiges begrenzt.

2. Netzgerät nach Anspruch 1, **dadurch gekennzeichnet, daß** die Zeitkonstante des RC-Zweiges Ladewiderstand (R)-Pufferkondensator (C) im Bereich von 5 bis 30 s liegt.

3. Netzgerät nach Anspruch 1 oder 2, **dadurch gekennzeichnet, daß** das Spannungsbegrenzungsmittel eine Zenerdiode (D_{z}) ist.

## Claims

1. Mains power supply unit for the purpose of supplying a consumer which is connected directly or via a voltage converter to an unstabilised direct voltage branch of the mains powe supply unit, having a buffer capacitor (C) which can be charged up from the direct voltage branch and which still supplies the direct voltage branch for a predetermined minimum perio of time in the event of a mains failure or interruption, and which buffer capacitor is connecte to the voltage (U1) of the direct voltage branch via a high-ohmic charge resistor (R), wherein connected in parallel with the charge resistor is a diode (D) via which the consumer is supplied from the buffer capacitor when the input direct voltage falls below the minimum voltage (U_{M}), **characterised in that** connected in parallel with the buffer capacitor (C) is a voltage limiting means (D_{Z}) which limits the voltage at the capacitor substantially to the direct voltage branch minimum voltage (U_{M}) to be expected during normal operation.

2. Mains power supply unit according to claim 1, **characterised in that** the time constant of the RC-branch charge resistor (R)-buffer capacitor (C) is in the range of 5 to 30 s.

3. Mains power supply unit according to claim 1 or 2, **characterised in that** the voltage limiting means is a Zener diode (D_{Z}).

## Revendications

1. Bloc secteur pour l'alimentation d'un consommateur branché directement ou par l'intermédiaire d'un convertisseur de fréquence sur une branche de tension continue non stabilisée du bloc secteur, avec un condensateur tampon (C) pouvant être chargé par la branche de tension continue, qui alimente encore pendant un temps minimum déterminé la branche de tension continue en cas de défaillances ou d'effondrement du secteur et qui est raccordé à l'aide d'une résistance de charge à forte valeur ohmique (R) à la tension (U1) de la branche de tension continue, une diode (D), par l'intermédiaire de laquelle le consommateur est alimenté par le condensateur tampon en cas de chute de la tension continue d'entrée en-dessous de la tension minimale (U_{M}), étant branchée en parallèle sur la résistance de charge, **caractérisé en ce qu'**un élément de limitation de tension (D_{Z}) est branché en parallèle avec le condensateur tampon (C), celui-ci limitant la tension sur le condensateur sensiblement à la tension minimale (U_{M}) de la branche de tension continue à laquelle il faut s'attendre en fonctionnement normal.

2. Bloc secteur selon la revendication 1, **caractérisé en ce que** la constante de temps de la branche RC se composant de la résistance de charge (R) et du condensateur tampon (C) est située dans une plage située entre 5 et 30 s.

3. Bloc secteur selon la revendication 1 ou 2, **caractérisé en ce que** l'élément de limitation de tension est une diode Zener (D_{Z}).
